# EUROPÄISCHE PATENTSCHRIFT

(11) **EP 3 229 242 B1**
(45) Veröffentlichungstag und Bekanntmachung des Hinweises auf die Patenterteilung: **12.02.2020**
(21) Anmeldenummer: 17159504.4
(22) Anmeldetag: 07.03.2017
(51) Int. Cl.: H01B 17/28, H01B 17/32, H01B 17/50

(54) **HOCHSPANNUNGSDURCHFÜHRUNG**
HIGH VOLTAGE FEED-THROUGH
TRAVERSÉE HAUTE TENSION

(30) Priorität: 04.04.2016 DE 102016205535
(43) Veröffentlichungstag der Anmeldung: 11.10.2017
(73) Patentinhaber: Siemens Aktiengesellschaft, 80333 München (DE)
(72) Erfinder: Engels, Engelbert, 51143 Köln (DE); Paul, Christian, 53347 Alfter (DE); Langens, Achim, 53797 Lohmar (DE)

(56) Entgegenhaltungen:
- EP-A2- 0 388 779
- EP-A2- 2 375 422
- DE-A1-102014 004 284
- US-A- 3 055 968
- US-A- 3 548 070
- US-A1- 2002 104 679

## Beschreibung

Die Erfindung betrifft eine Hochspannungsdurchführung mit einem Innenleiter, einem den Innenleiter entlang dessen Längsrichtung umgebenden Isolierkörper, wobei der Innenleiter an einem Kopfende der Hochspannungsdurchführung aus dem Isolierkörper herausgeführt ist, einem am Isolierkörper angeordneten Befestigungsflansch sowie einem äußeren Gehäuse.

Eine derartige Hochspannungsdurchführung ist beispielsweise aus der WO 2011/086033 A1 bekannt. Sie hat die Aufgabe, eine sich auf Hochspannungspotential befindende Hochspannungsleitung mit einem stromführenden Stromleiter von einer sich im Wesentlichen auf Erdpotential befindenden Umgebung, beispielsweise einer Wandung, zu isolieren. Die bekannte Hochspannungsdurchführung wird mittels des Befestigungsflansches an der Wandung eines Transformators befestigt. Der aus dem Isolierkörper herausgeführte Innenleiter wird an einen Abschnitt einer Hochspannungsleitung angeschlossen. Der Isolierkörper sorgt für eine zur Vermeidung von Spannungsüberschlägen notwendige Isolation zwischen Innenleiter und Wandung.

Bei den bekannten Hochspannungsdurchführungen wird das Gehäuse zum Schutz vor Eindringen von Feuchtigkeit in den Isolierkörper und vor schädlicher Einwirkung äußerer Umwelteinflüsse mittels geeigneter Dichtsysteme abgedichtet. Insbesondere an Bauteilübergangsstellen werden Dichtungen, wie beispielsweise O-Ringdichtungen und/oder Flachdichtungen eingesetzt. Bei einer zu erwartenden sehr langen Lebensdauer der Hochspannungsdurchführung von mehr als fünfundzwanzig Jahren sind solche Dichtsysteme mitunter besonders starken Umwelteinflüssen ausgesetzt. In einem Langzeiteinsatz können an diesen Stellen Undichtigkeiten auftreten, die die Einsatzfähigkeit der Hochspannungsdurchführung mindern können.

Eine Hochspannungsdurchführung mit einem Gehäuse aus Silikon ist aus der US 2002/0104679 A1 bekannt.

Des Weiteren sind aus der DE 10 2014 004 284 A1 und der EP 2 375 422 A2 Durchführungen bekannt, deren Gehäuseteile materialschlüssig miteinander verbunden sind.

Die Aufgabe der Erfindung ist es, eine Hochspannungsdurchführung der eingangs genannten Art vorzuschlagen, die gegenüber der bekannten Hochspannungsdurchführung betriebssicherer ist.

Die Aufgabe wird bei einer artgemäßen Hochspannungsdurchführung durch die Merkmale des Patentanspruchs 1 gelöst. Demnach umschließt erfindungsgemäß das Gehäuse den Innenleiter und den Isolierkörper vom Befestigungsflansch bis einschließlich dem Kopfende feuchtigkeitsdicht.

Erfindungsgemäß ist die Hochspannungsdurchführung kopfendenseitig des Befestigungsflansches von dem äußeren Gehäuse umschlossen. Axial zwischen dem Befestigungsflansch und einem dem Kopfende gegenüber angeordneten Fußende brauchen der Isolierkörper und der Innenleiter nicht vom Gehäuse zusätzlich geschützt zu werden, weil dieses sich im montierten Zustand innerhalb einer Gehäusewandung einer Hochspannungsanlage befindet, beispielsweise einer Gehäusewandung eines Transformators. Daher ist dieser fußendenseitige Teil der Hochspannungsdurchführung durch die Gehäusewandung genügend vor äußeren Umwelteinflüssen geschützt.

Das äußere Gehäuse der Hochspannungsdurchführung umschließt insbesondere auch den Innenleiter am Kopfende der Hochspannungsdurchführung. Auf diese Weise lassen sich zu dichtende Stellen an einem Übergang zwischen dem Gehäuse und dem aus dem Isolierkörper herausgeführten Innenleiter vorteilhaft komplett vermeiden. Schmutz und Feuchtigkeit können nicht in das Innere zum Isolierkörper eindringen. Dies kann vorteilhaft die Lebensdauer der Hochspannungsdurchführung verlängern und die Wartungskosten senken. Insbesondere an Betriebsorten, wo die Zugänglichkeit zur Hochspannungsdurchführung eingeschränkt ist, wie beispielsweise im Offshore-Bereich, lässt sich auf diese Weise ein Kostenvorteil durch Erhöhung der Betriebssicherheit der Hochspannungsdurchführung erreichen.

Erfindungsgemäß sind alle separaten Gehäuseelemente des Gehäuses mittels Klebung miteinander verbunden. Auf diese Weise kann vorteilhaft auf Schraubverbindungen zwischen den einzelnen Gehäuseelementen verzichtet werden. Die bei Schraub- oder anderen mechanischen Verbindungen notwendigen Dichtvorrichtungen entfallen hierbei. Die flächig ausgeführte Klebung sorgt für eine verbesserte Dichtigkeit. Als eine besonders geeignete Klebung wird in diesem Zusammenhang eine dem Fachmann bekannte Schrumpfklebung angesehen.

Gemäß der Erfindung umfasst das äußere Gehäuse eine Kopfarmatur am Kopfende, eine Fußarmatur am Befestigungsflansch sowie ein die Kopfarmatur und die Fußarmatur verbindendes Verbindungsrohr. Auf diese Weise ist ein besonders einfacher Aufbau des Gehäuses gegeben, bei dem nur wenige Teile bzw. Gehäuseelemente ausreichen, um den notwendigen Schutz der Hochspannungsvorrichtung bereitzustellen. Das Verbindungsrohr kann beispielsweise in eine entsprechend dimensionierte Ausnehmung in der Fußarmatur und eine entsprechende Ausnehmung in der Kopfarmatur eingesetzt werden, so dass die Verbindungsstellen zwischen den Gehäuseelementen möglichst flächig ausgebildet sind. Bevorzugt bildet die Fußarmatur mit dem Befestigungsflansch ein Bauteil.

Vorzugsweise ist die Kopfarmatur aus einem Metall. Auf diese Weise ist ein besonders robustes Gehäuseelement bereitgestellt, das zudem stromführend sein kann.

Gemäß einer bevorzugten Ausführungsform der Erfindung weist die Kopfarmatur äußere Stromkontaktmittel auf, die in das Gehäuse integriert sind. Die äußeren Stromkontaktmittel dienen zur Herstellung einer elektrischen Verbindung zwischen der Kopfarmatur bzw. dem Innenleiter und einem Hochspannungsleiter. Die äußeren Stromkontaktmittel erlauben es, auf eine gesonderte Abdichtung des Gehäuses der Hochspannungsdurchführung an einer direkten Kontaktstelle zwischen dem Innenleiter und dem Hochspannungsleiter zu verzichten. Im einfachsten Fall bestehen die äußeren Stromkontaktmittel aus einer Stange aus elektrisch leitendem Material. Alternativ kann ein Gewinde vorgesehen sein, dass an dem äußeren Gehäuse ausgebildet ist. Entsprechend sind an dem zu verbindenden Hochspannungsleiter Mittel zur Herstellung einer Schraubverbindung mit dem Gewinde vorzusehen.

Vorzugsweise weist die Kopfarmatur innere Stromkontaktmittel auf, die in das Gehäuse integriert sind. Die inneren Stromkontaktmittel dienen zur Herstellung einer elektrischen Verbindung zwischen der Kopfarmatur und dem Innenleiter. Beispielsweise können die inneren Stromkontaktmittel Kontaktlamellen umfassen, die an einer Innenseite einer Innenausnehmung in der Kopfarmatur angeordnet sind. Die Innenausnehmung ist dabei zur Aufnahme des aus dem Isolierkörper herausgeführten Abschnittes des Innenleiters eingerichtet.

Sind an der Kopfarmatur sowohl die inneren als auch die äußeren Stromkontaktmittel vorgesehen, so ist die elektrische Verbindung zwischen dem Innenleiter und dem zu verbindenden Hochspannungsleiter komplett über die Kopfarmatur hergestellt. Ein Herausführen des Innenleiters aus dem äußeren Gehäuse ist damit nicht erforderlich.

Das Verbindungsrohr besteht aus einem glasfaserverstärkten Kunststoff. Dieses Material wird als besonders robust angesehen.

Gemäß der Erfindung ist zwischen dem Gehäuse und dem Isolierkörper eine Nebenisolation vorgesehen und die Hochspannungsdurchführung eine Einrichtung zum Einfüllen der Nebenisolation umfasst, wobei die Einrichtung einen Füllkanal aufweist, der zumindest teilweise im Befestigungsflansch verläuft und sich zur einer dem Gehäuse abgewandten Seite verschließbar öffnet. Die Nebenisolation dient zur weiteren Isolierung des Innenleiters und zur weiteren Abdichtung eines Zwischenraumes zwischen dem Isolierkörper und dem äußeren Gehäuse. Die Nebenisolation wird nach dem Zusammensetzen der Hochspannungsdurchführung durch den Füllkanal in den Zwischenraum eingefüllt. Durch die Anordnung einer Öffnung des Füllkanals zu der dem äußeren Gehäuse abgewandten Seite kann die Notwendigkeit aufwändiger Dichtungen am Füllkanal vermieden werden. Die Öffnung des Füllkanals befindet sich auf der der Gehäusewandung der Hochspannungsanlage zugewandten Seite und ist durch diese geschützt.

Bevorzugt umfasst die Nebenisolation einen Polyurethanschaum. Der Polyurethanschaum ist ein Trockenschaum, der besonders gute Isolationseigenschaften aufweist. Der Polyurethanschaum wird gemäß bekannter Verfahren mit einem Gas, beispielsweise SF6 oder Stickstoff, aufgeschäumt und anschließend in den Zwischenraum eingefüllt.

Gemäß einer weiteren Ausführungsform der Erfindung umfasst die Hochspannungsdurchführung einen Messanschluss zur Potenzialmessung, wobei der Messanschluss vom Gehäuse feuchtigkeitsdicht umschlossen ist. Die Potenzialmessung dient einer Zustandsüberwachung der Hochspannungsdurchführung. Dazu wird eine Messeinrichtung zur Messung von Strom und/oder Spannung an den Messanschluss angeschlossen. Bevorzugt umfasst das äußere Gehäuse eine Messausgangsarmatur, die den Messanschluss umschließt und die mit den übrigen Gehäuseelementen des Gehäuses feuchtigkeitsdicht, beispielsweise mittels Klebung, verbunden ist.

Geeigneterweise umfasst der Isolierkörper durch Isolierlagen aus harzimprägniertem Papier voneinander beabstandete, elektrisch leitende Steuereinlagen zur Feldsteuerung. Ein derart ausgebildeter Isolierkörper bildet einen kompakten Block. Eine Ölisolierung ist bei dieser Hochspannungsdurchführung nicht mehr notwendig. Alternativ kann der Isolierkörper Isolierlagen aus harzimprägnierten Synthetika (resin impregnated synthetics, RIS) umfassen. Das synthetische Material ist unempfindlich gegenüber Feuchtigkeit.

Die Erfindung betrifft ferner eine Hochspannungsanlage mit einem durch eine Gehäusewandung der Hochspannungsanlage mittels einer Hochspannungsdurchführung geführten Hochspannungsleiter.

Hochspannungsanlagen dieser Art sind aus dem Stand der Technik bekannt. Beispielsweise weisen Transformatoren und gasisolierte Schaltanlagen Gehäusewandungen auf, so dass die Hochspannungsleiter dieser Hochspannungsanlagen mittels Hochspannungsdurchführungen durch die Gehäusewandungen geführt werden müssen, um elektrische Überschläge zu vermeiden und eine ausreichende Isolation zu gewährleisten.

Die Aufgabe der vorliegenden Erfindung ist es, eine solche Hochspannungsanlage vorzuschlagen, die möglichst betriebssicher ist.

Die Aufgabe wird bei einer artgemäßen Hochspannungsanlage dadurch gelöst, dass die Hochspannungsdurchführung eine erfindungsgemäße Hochspannungsdurchführung ist.

Die Vorteile der erfindungsgemäßen Hochspannungsanlage ergeben sich aus den zuvor im Zusammenhang mit der erfindungsgemäßen Hochspannungsdurchführung beschriebenen Vorteilen.

Gemäß einer Ausführungsform der Erfindung ist die Hochspannungsdurchführung steckbar. Dazu kann die Hochspannungsanlage eine Durchführungssteckbuchse umfassen. Die Durchführungssteckbuchse ist ein Teil des Gehäuses der Hochspannungsanlage, so dass das Gehäuse isoliermitteldicht abgeschlossen ist. Die steckbare Hochspannungsdurchführung weist einen Einsteckabschnitt zum Einstecken in die Durchführungssteckbuchse. Beispielsweise ist die steckbare Hochspannungsdurchführung mit einem Teil eines sich zu einem Ender der Hochspannungsdurchführung hin verjüngenden Endes der Hochspannungsdurchführung in die Durchführungssteckbuchse einsetzbar bzw. einsteckbar. Dabei entsteht auf eine einfache und zuverlässige Weise eine elektrische Verbindung zwischen dem Innenleiter der Hochspannungsdurchführung und einem elektrischen Leiter, der mit der Durchführungssteckbuchse verbunden ist. Zugleich gewährleistet die steckbare Hochspannungsdurchführung in Zusammenwirkung mit der Durchführungssteckbuchse eine ausreichende dielektrische Festigkeit im Bereich der Grenzflächen zwischen der Hochspannungsdurchführung und der Durchführungssteckbuchse.

Gemäß einer bevorzugten Ausgestaltung ist der Einsteckabschnitt der Hochspannungsdurchführung von einem zähflüssigen Isolator ummantelt, wobei sich an dem freien Ende des Einsteckabschnitts ein Hochspannungsleiter durch den zähflüssigen Isolator oder mit anderen Worten den Mantel erstreckt. Der zähflüssige oder hochviskose Isolator sorgt als äußerer Mantel für die ausreichende elektrische Isolierung zwischen den aneinander anliegenden isolierenden und formstabilen Feststoffen von Durchführungssteckbuchse und Einsteckabschnitt. Der Isolator ist zweckmäßigerweise eine pastöse schmierfähige Substanz mit Fließeigenschaften. Durch die Fließeigenschaften wird der zähflüssige Isolator in die Fuge zwischen dem Einsteckabschnitt der Hochspannungsdurchführung und dem Aufnahmeabschnitt der Durchführungssteckbuchse gepresst und füllt diese vollständig aus. Zur Aufnahme vom möglicherweise über flüssigen zähflüssigen Isolator weist der Aufnahmeabschnitt ein ausreichend großes Zusatzvolumen mit Freiräumen aus, in welche der zähflüssige Isolator gepresst werden kann. Lufteinschlüsse zwischen Einsteckabschnitt und Aufnahmeabschnitt mit hohen elektrischen Feldstärken im Gefolge können auf diese Weise vermieden werden.

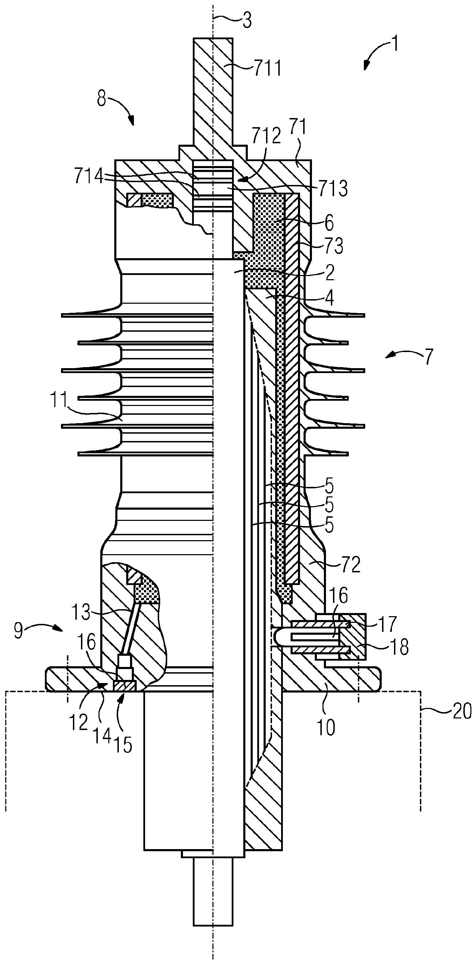

Die Erfindung soll im Folgenden anhand des in der Figur dargestellten Ausführungsbeispiels näher erläutert werden.

Die Figur zeigt ein Ausführungsbeispiel einer erfindungsgemäßen Hochspannungsdurchführung in einer schematischen Darstellung.

Im Einzelnen zeigt die Figur eine Hochspannungsdurchführung 1 mit einem Innenleiter 2, der sich entlang einer Längsachse 3 der Hochspannungsdurchführung 1 erstreckt. Der Innenleiter 2 ist von einem Isolierkörper 4 umgeben. Der Isolierkörper 4 umfasst Steuereinlagen 5 zur kapazitiven Steuerung der Hochspannungsdurchführung 1, die voneinander durch Isolierlagen aus harzgetränktem Papier oder synthetischem Vlies getrennt sind.

Die Hochspannungsdurchführung 1 umfasst ferner eine Nebenisolation 6 aus Trockenschaum. Die Nebenisolation 6 füllt einen Zwischenraum zwischen dem Isolierkörper 4 und einem äußeren Gehäuse 7 aus.

Das äußere Gehäuse 7 umfasst eine Kopfarmatur 71 an einem Kopfende 8 der Hochspannungsdurchführung 1, eine Fußarmatur 72 an einem Fußende 9 sowie ein Verbindungsrohr 73. Das Verbindungsrohr 73 ist aus deinem glasfaserverstärkten Kunststoff.

Zur Befestigung der Hochspannungsdurchführung 1 an einer Wandung einer Hochspannungsanlage 20 umfasst die Hochspannungsdurchführung 1 einen Befestigungsflansch 10. Der Befestigungsflansch 10 bildet in dem in der Figur dargestellten Ausführungsbeispiel mit der Fußarmatur 72 eine Einheit.

An dem äußeren Gehäuse 7 sind weitere Isolationselemente 11 aus Silikon angebracht.

Die aus Metall bestehende Kopfarmatur 71 umschließt im Bereich des Kopfendes 8 den Isolierkörper 4 samt des Innenleiters 2. Die Kopfarmatur 71 umfasst äußere Stromkontaktmittel 711 zur Herstellung einer elektrischen Verbindung mit einem Hochspannungsleiter (nicht dargestellt). Darüber hinaus umfasst die Kopfarmatur 71 innere Stromkontaktmittel 712 zum Anschluss des Innenleiters 2 an die Kopfarmatur 71. Die inneren Stromkontaktmittel 712 umfassen eine zur Aufnahme des Innenleiters dimensionierte Innenausnehmung 713 sowie Kontaktlamellen 714.

Die Fußarmatur 72 umfasst eine Einrichtung 12 zum Einfüllen der Nebenisolation. Die Einrichtung 12 weist einen Einfüllkanal 13 auf. Der Einfüllkanal 13 verläuft zwischen dem zu befüllenden Zwischenraum zwischen dem Isolierkörper 4 und dem Gehäuse 7 und der vom Kopfende 8 weg weisenden Seite 14 des Befestigungsflansches 10. Ist die Hochspannungsdurchführung 1 an der Wandung der Hochspannungsanlage 20 montiert, so ist die Öffnung 15 des Einfüllkanals durch die Wandung verdeckt. Die Öffnung 15 ist zusätzlich mit einer Dichtung 16 verschlossen.

Die Fußarmatur 72 umfasst darüber hinaus eine seitliche Bohrung für einen Potenzialausgang mit einem Messanschluss 16 zur Potenzialmessung. Der Messanschluss 16 ist von einem seitlichen Rohr 17 aus glasfaserverstärktem Kunststoff und einer Haube 18 aus Metall umschlossen. Die Haube 18 enthält einen inneren und einen äußeren Anschluss zur Verbindung des Messanschlusses 16 mit einer separaten Messvorrichtung (nicht dargestellt) oder eines festen Potenzials.

Die Kopfarmatur 71, die Fußarmatur 72, das Verbindungsrohr 73, das seitliche Rohr 17 und die Haube 18 sind miteinander mittels Klebung dicht verbunden. Das Verbindungsrohr 73 und das seitliche Rohr 17 sind zudem an ihren nach außen zugänglichen Stellen silikonisiert, das heißt, mit einem Silikonüberzug versehen.

## Patentansprüche

1. Hochspannungsdurchführung (1) mit
- einem Innenleiter (2),
- einem den Innenleiter (2) entlang dessen Längsrichtung (3) umgebenden Isolierkörper (4), wobei der Innenleiter (2) an einem Kopfende (8) der Hochspannungsdurchführung (1) aus dem Isolierkörper (4) herausgeführt ist,
- einem am Isolierkörper (4) angeordneten Befestigungsflansch (10) sowie
- einem äußeren Gehäuse (7), wobei
das Gehäuse (7) den Innenleiter (2) und den Isolierkörper (4) vom Befestigungsflansch (10) bis einschließlich dem Kopfende (8) feuchtigkeitsdicht umschließt,
**dadurch gekennzeichnet, dass** alle separaten Gehäuseelemente (71-73) des Gehäuses mittels Klebung miteinander verbunden sind, wobei das Gehäuse (7) eine Kopfarmatur (71) am Kopfende (8), eine Fußarmatur (72) am Befestigungsflansch (10) sowie ein die Kopfarmatur (71) und die Fußarmatur (72) verbindendes Verbindungsrohr (73) aus einem glasfaserverstärkten Kunststoff umfasst, wobei
zwischen dem Gehäuse (7) und dem Isolierkörper (4) eine Nebenisolation (6) aus Trockenschaum vorgesehen ist und die Hochspannungsdurchführung (1) eine Einrichtung (12) zum Einfüllen der Nebenisolation (6) umfasst, wobei die Einrichtung (12) einen Füllkanal (13) aufweist, der zumindest teilweise im Befestigungsflansch (10) verläuft und sich zur einer dem Gehäuse (7) abgewandten Seite (14) verschließbar öffnet.

2. Hochspannungsdurchführung (1) nach Anspruch 1, wobei die Kopfarmatur (71) aus einem Metall ist.

3. Hochspannungsdurchführung (1) nach einem der Ansprüche 1 oder 2, wobei die Kopfarmatur (71) äußere Stromkontaktmittel (711) aufweist, die in das Gehäuse (7) integriert sind.

4. Hochspannungsdurchführung (1) nach einem der Ansprüche 1 bis 3, wobei die Kopfarmatur (71) innere Stromkontaktmittel (712) aufweist, die in das Gehäuse (7) integriert sind.

5. Hochspannungsdurchführung (1) nach Anspruch 1, wobei die Nebenisolation (6) einen Polyurethanschaum umfasst.

6. Hochspannungsdurchführung (1) nach einem der vorangehenden Ansprüche, wobei die Hochspannungsdurchführung (1) einen Messanschluss (16) zur Potenzialmessung umfasst, wobei der Messanschluss (16) vom Gehäuse (7) feuchtigkeitsdicht umschlossen ist.

7. Hochspannungsdurchführung (1) nach einem der vorangehenden Ansprüche, wobei der Isolierkörper (4) durch Isolierlagen aus harzimprägniertem Papier voneinander beabstandete, elektrisch leitende Steuereinlagen (5) zur Feldsteuerung umfasst.

8. Hochspannungsanlage (20) mit einem durch eine Gehäusewandung der Hochspannungsanlage mittels einer Hochspannungsdurchführung (1) nach einem der Ansprüche 1 bis 7 geführten Hochspannungsleiter.

## Claims

1. High-voltage bushing (1) comprising
- an internal conductor (2),
- an insulating body (4) which surrounds the internal conductor (2) along its longitudinal direction (3), wherein the internal conductor (2) is routed out of the insulating body (4) at a head end (8) of the high-voltage bushing (1),
- a fastening flange (10) which is arranged on the insulating body (4), and also
- an outer housing (7), wherein
the housing (7) encloses the internal conductor (2) and the insulating body (4) from the fastening flange (10) up to and including the head end (8) in a moisture-tight manner. **characterized in that**
all of the separate housing elements (71-73) of the housing are connected to one another by means of adhesive bonding,
wherein the housing (7) comprises a head fitting (71) at the head end (8), a foot fitting (72) on the fastening flange (10), and also a connecting pipe (73) which connects the head fitting (71) and the foot fitting (72) and which is composed of a glass fiber-reinforced plastic, wherein a secondary insulation (6) composed of dry foam is provided between the housing (7) and the insulating body (4), and the high-voltage bushing (1) comprises a device (12) for filling the secondary insulation (6), wherein the device (12) has a filling channel (13) which runs at least partially in the fastening flange (10) and opens to a side (14), which is averted from the housing (7), such that it can be closed.

2. High-voltage bushing (1) according to Claim 1, wherein the head fitting (71) is composed of a metal.

3. High-voltage bushing (1) according to either of Claims 1 and 2, wherein the head fitting (71) has outer current contact means (711) which are integrated into the housing (7).

4. High-voltage bushing (1) according to one of Claims 1 to 3, wherein the head fitting (71) has inner current contact means (712) which are integrated into the housing (7).

5. High-voltage bushing (1) according to Claim 1, wherein the secondary insulation (6) comprises a polyurethane foam.

6. High-voltage bushing (1) according to one of the preceding claims, wherein the high-voltage bushing (1) comprises a measurement connection (16) for potential measurement, wherein the measurement connection (16) is enclosed by the housing (7) in a moisture-tight manner.

7. High-voltage bushing (1) according to one of the preceding claims, wherein the insulating body (4) comprises electrically conductive control inserts (5), which are spaced apart from one another by insulating layers which are composed of resin-impregnated paper, for field control.

8. High-voltage installation (20) comprising a high-voltage conductor which is routed through a housing wall of the high-voltage installation by means of a high-voltage bushing (1) according to one of Claims 1 to 7.

## Revendications

1. Traversée (1) de haute tension, comprenant
- un conducteur (2) intérieur,
- une pièce (4) isolante entourant le conducteur (2) intérieur suivant sa direction (3) longitudinale, le conducteur (2) intérieur étant, à une extrémité (8) de tête de la traversée (1) de haute tension, sorti de la pièce (4) isolante,
- une bride (10) de fixation, montée sur la pièce (4) isolante ainsi que
- un boîtier (7) extérieur, dans laquelle le boîtier (7) entoure le conducteur (2) intérieur et la pièce (4) isolante, d'une manière étanche à l'humidité, de la bride (10) de fixation jusqu'à y compris l'extrémité (8) de tête,
**caractérisée en ce que**
tous les éléments (71 à 73) distincts du boîtier sont assemblés ensemble au moyen d'un collage, le boîtier (7) comprenant une armature (71) de tête à l'extrémité (8) de tête, une armature (72) de pied à la bride (10) de fixation, ainsi qu'un tube (73) de liaison en une matière plastique renforcée par de la fibre de verre et reliant l'armature (71) de tête et l'armature (72) de pied,
dans laquelle
il est prévu, entre le boîtier (7) et la pièce (4) isolante, une isolation (6) secondaire en mousse sèche et la traversée (1) de haute tension comprend un dispositif (12) pour introduire l'isolation (6) secondaire, le dispositif (12) ayant un conduit (13) de remplissage, qui s'étend, au moins en partie, dans la bride (10) de fixation et s'ouvre, avec possibilité d'être fermé, du côté (14) loin du boîtier (7).

2. Traversée (1) de haute tension suivant la revendication 1, dans laquelle l'armature (71) de tête est en un métal.

3. Traversée (1) de haute tension suivant l'une des revendications 1 ou 2, dans laquelle l'armature (71) de tête a des moyens (711) extérieurs de contact de courant, qui sont intégrés au boîtier (7).

4. Traversée (1) de haute tension suivant l'une des revendications 1 à 3, dans laquelle l'armature (71) de tête a des moyens (712) intérieurs de contact de courant, qui sont intégrés au boîtier (7).

5. Traversée (1) de haute tension suivant la revendication 1, dans laquelle l'isolation (6) secondaire comprend une mousse de polyuréthane.

6. Traversée (1) de haute tension suivant l'une des revendications précédentes, dans laquelle la traversée (1) de haute tension comprend une borne (16) de mesure pour mesurer le potentiel, la borne (16) de mesure étant entourée d'une manière étanche à l'humidité du boîtier (7).

7. Traversée (1) de haute tension suivant l'une des revendications précédentes, dans laquelle la pièce (4) isolante comprend, pour la commande du champ, des inserts (5) de commande conducteurs de l'électricité et mis à distance les uns des autres par des couches isolantes en papier imprégné de résine.

8. Installation (20) de haute tension, comprenant un conducteur de haute tension traversant une paroi de boîtier de l'installation de haute tension au moyen d'une traversée (1) de haute tension suivant l'une des revendications 1 à 7.
